# EUROPÄISCHE PATENTSCHRIFT

(11) **EP 1 048 553 B1**
(45) Veröffentlichungstag und Bekanntmachung des Hinweises auf die Patenterteilung: **28.07.2004**
(21) Anmeldenummer: 00108641.2
(22) Anmeldetag: 20.04.2000
(51) Int. Cl.: B62D 25/06, B62D 65/00, B60R 13/02

(54) **Fahrzeugdach mit eingesetzem Dachmodul und Montageverfahren dafür**
Vehicle roof with incorporated roof unit and assembly method thereof
Toit de véhicule avec module de toit incorporé et son procédé de montage

(30) Priorität: 29.04.1999 DE 19919505
(43) Veröffentlichungstag der Anmeldung: 02.11.2000
(73) Patentinhaber: Webasto Vehicle Systems International GmbH, 82131 Stockdorf (DE)
(72) Erfinder: Seifert, Wolfgang, 82110 Germering (DE)
(74) Vertreter: Wiese, Gerhard

(56) Entgegenhaltungen:
- WO-A-96/09952
- US-A- 4 900 083
- US-A- 4 914 802
- US-A- 5 280 991
- PATENT ABSTRACTS OF JAPAN vol. 014, no. 583 (M-1064), 26. Dezember 1990 (1990-12-26) & JP 02 254079 A (NISSAN MOTOR CO LTD), 12. Oktober 1990 (1990-10-12)

## Beschreibung

Die vorliegende Erfindung betrifft ein Fahrzeugdach gemäß dem Oberbegriff von Anspruch 1 sowie ein Verfahren zur Montage eines solchen Fahrzeugdachs.

Ein gattungsgemäßes Fahrzeugdach ist beispielsweise aus DE 197 09 016 A1 bekannt. Bei diesem Fahrzeugdach wird ein vormontiertes Dachmodul auf eine von einem Karosserierahmen umgebene Dachöffnung von oben aufgesetzt und an dem Karosserierahmen befestigt. Das Dachmodul umfaßt einen starren Deckel, der in seinen Abmessungen im wesentlichen dem Karosserierahmen entspricht, sowie einen unterhalb des Deckels angeordneten Dachhimmel, der in seinen Umfangsrandbereichen über den Deckel, und damit auch den Karosserierahmen, hinaussteht. Dieser überstehende Randbereich des Dachhimmels ist flexibel ausgebildet, so daß er bei der Montage des Dachmoduls auf den Karosserierahmen ohne bleibende Verformung beim Durchtritt durch den Karosserierahmen nach unten umgebogen werden kann, wobei nachfolgend ein Zurückbiegen des Randbereichs des Dachhimmels möglich ist, um den Karosserierahmen von unten abzudecken.

Ein ähnliches Dachmodul ist auch in A. Weißbrich et al., VDI-Berichte Nr. 1264, 1996, Seiten 513 bis 534 beschrieben.

Nachteilig bei solchen Dachmodulen ist, daß der umbiegbare Randbereich des Dachhimmels zu zusätzlichen Kosten sowie aufgrund der zusätzlichen Stoßstellen in den vier Eckbereichen zu Nachteilen im Design führt.

Aus DE 195 02 019 C1 ist ein Fahrzeugdach bekannt, bei welchem ein Dachmodul, welches zwei je einen Längsholm und eine B-Säule umfassende Seitenteile sowie eine Dachplatte und einen Querholm aufweist, in Höhe der Gürtellinie auf die Rohkarosserie eines Fahrzeugs aufgesetzt und an der Rohkarosserie befestigt wird.

Aus DE 43 13 555 C1 ist ein Fahrzeugdach mit einem Dachmodul bekannt, welches einen aus zwei Längsträgern und drei Querträgern zusammengesetzten Modulrahmen umfaßt, welcher zwischen zwei Karosserielängsträgern an vorgegebenen Befestigungspunkten, die als Einschraubbuchsen in den Karosserielängsträgern ausgebildet sind, in einer sich zwischen den Karosserielängsträgern erstreckenden Dachöffnung eingeschraubt werden kann, wobei das Einschrauben in die Einschraubbuchsen von der Innenseite her erfolgt. Der befestigte Modulrahmen kann sich von der Frontscheibe des Fahrzeugs bis zu dessen Heckscheibe erstrecken.

Weitere Fahrzeugdächer mit querverstrebten Modulrahmen sind beispielsweise aus DE 32 22 419 A1 und DE-AS-1 630 925 bekannt.

Es ist Aufgabe der vorliegenden Erfindung, ein Fahrzeugdach mit einem vormontierten Dachmodul zu schaffen, welches einfach und kostengünstig ausgebildet ist und dennoch auf einfache Weise an zwei fahrzeugfesten seitlichen Längsträgern montiert werden kann. Ferner ist es Aufgabe der vorliegenden Erfindung, ein entsprechendes Montageverfahren zu schaffen.

Die obigen Aufgaben werden erfindungsgemäß gelöst durch ein Fahrzeugdach, wie es in Anspruch 1 definiert ist, bzw. ein Dachmodul, wie es in Anspruch 15 definiert ist, sowie durch ein Montageverfahren, wie es in Anspruch 11 definiert ist.

Bei dem erfindungsgemäßen Fahrzeugdach bzw. Montageverfahren ist vorteilhaft, daß der untere Teil des Dachmoduls, welcher den jeweiligen Längsträger untergreift, im wesentlichen starr, d.h. in einfacher Weise und ästhetisch ansprechend, ausgebildet ist und dennoch durch die entsprechende Gestaltung des Dachmoduls und des Fahrzeugdachs eine einfache Montage möglich ist, da das Dachmodul bei der Montage in die Längsträger des Fahrzeugdaches eingeschoben werden kann. Dabei kann der untere Teil des Dachmoduls bevorzugt eine leichte Flexibilität aufweisen, die das Einschieben des Dachmoduls erleichtert und garantiert, das sich das bevorzugt als Randbereich eines Festhimmels ausgebildete untere Teil des Dachmoduls nach dem Verkleben des Dachmoduls mit den Längsträgern möglichst eng von unten her an die Dachholme anlegt. Durch Montage von vorne wird ferner weniger Höhe über dem Montageband im PKW Montagewerk nötig.

Zur Querversteifung des Fahrzeugdaches ist vorzugsweise mindestens ein Querträger zur Verbindung der beiden Längsträger in das Dachmodul integriert. Dabei ist vorzugsweise bei von vom bzw. von hinten einschiebbarem Dachmodul der vordere bzw. hintere Querträger des Fahrzeugdaches durch einen entsprechenden integrierten Querträger des Dachmoduls ersetzt. Dadurch kann auf einfache Weise die Einschiebbarkeit des Dachmoduls in die Längsträger realisiert werden, ohne daß ein entsprechender Stabilitätsverlust des Fahrzeugdaches als Ganzes eintritt.

In weiterer bevorzugter Ausgestaltung der Erfindung sind die beiden Längsträger mit einem im wesentlichen horizontal liegenden Auflageflansch für das Dachmodul versehen, auf welchem bei befestigtem Dachmodul jeweils der obere starre Teil aufliegt und vorzugsweise mittels einer Kleberaupe befestigt ist. Bei dem starren oberen Teil handelt es sich vorzugsweise um einen Teil eines Modulrahmens.

Das erfindungsgemäße Montageverfahren ist vorzugsweise so weitergebildet, daß vor dem Einschieben des Dachmoduls eine Kleberaupe auf jeden Längsträger aufgebracht wird, beim Einschieben das Dachmodul in einer bestimmten Höhe bewegt wird, so daß der Abstand des starren oberen Teils zu der Kleberaupe hinreichend ist, um eine Berührung zu vermeiden, und nach Erreichen der Endposition des Dachmoduls das Dachmodul auf die Kleberaupe abgesenkt wird, so daß die Kleberaupe nach dem Aushärten eine feste Verbindung zwischen dem Dachmodul und den Längsträgern herstellt.

Die Höhe des Dachmoduls beim Einschieben wird durch den Roboter bestimmt. Falls erforderlich, können die Längsträger an ihrer Unterseite jeweils eine Abstützfläche aufweisen, an welcher die Außenkante des Fahrzeuginnenhimmels beim Einfahren des Moduls solange nach unten gehalten werden kann, bis nach Absetzen des Moduls auf den Flansch mit Kleberaupe diese Außenkante elastisch zurückfedert.

Zur Erhöhung der Stabilität des Daches kann der bzw. jeder in das Dachmodul integrierte Querträger nach dem Absenken des Dachmoduls auf die Kleberaupe mit den Längsträgern verschraubt werden.

Im folgenden ist eine Ausführungsform der Erfindung anhand der beiliegenden Zeichnungen beispielhaft näher erläutert. Es zeigen:
- Fig. 1: eine perspektivische Ansicht eines erfindungsgemäßen Fahrzeugdachs mit einem Dachmodul zu Beginn der Montage des Dachmoduls;
- Fig. 2: eine Schnittansicht entlang der Linie II-II von Fig. 1, wobei jedoch das Dachmodul bereits in die Längsträger der Karosserie eingeschoben ist, aber noch nicht an den Längsträgern befestigt ist; und
- Fig. 3: eine Ansicht wie Fig. 2, wobei jedoch das Dachmodul am Ende des Montagevorgangs in an den Karosserielängsträgern befestigtem Zustand gezeigt ist.

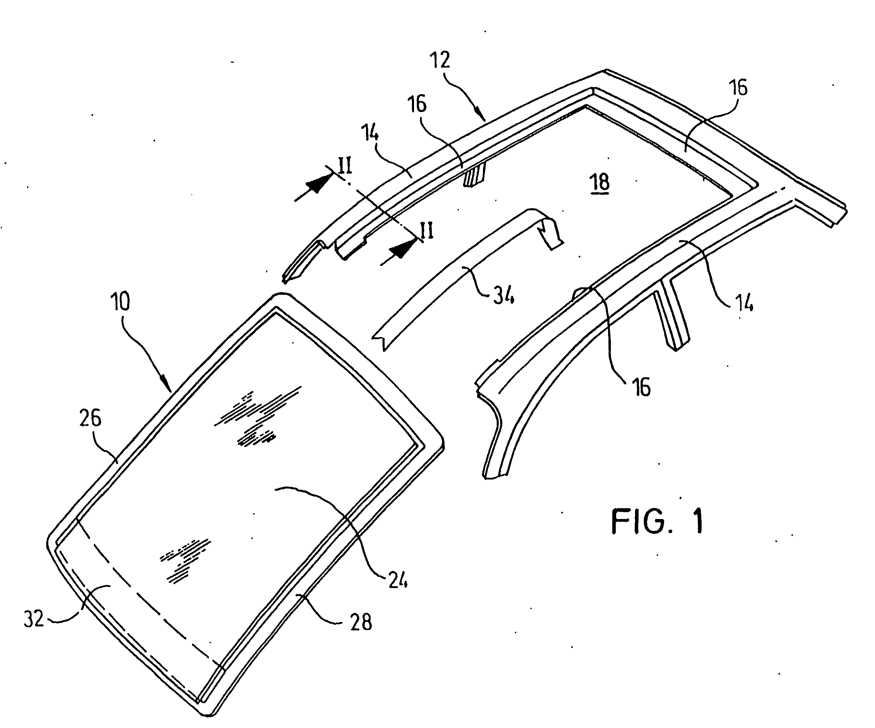

In Fig. 1 ist ein vormontiertes Dachmodul 10 zu Beginn der Montage in einem Dach bzw. einer Rohkarosserie 12 eines Fahrzeugs gezeigt. Das Dach 12 umfaßt zwei in Dachlängsrichtung verlaufende seitliche Längsträger 14, die jeweils einen im wesentlichen horizontal verlaufenden Anlageflansch 16 aufweisen und zwischen denen eine Dachöffnung 18 ausgebildet ist. Im hinteren Bereich des Fahrzeugdaches 12 erstreckt sich der Anlageflansch 16 zwischen den beiden Längsträgern 14 und bildet so die hintere Begrenzung der Dachöffnung 18. Auf dem Anlageflansch 14 oder auf der Unterseite des Modulrahmens 22 (im Umfangsrandbereich 30) ist eine Kleberaupe 20 vorgesehen (in Fig. 1 nicht dargestellt). Gemäß Fig. 1 sind an dem Fahrzeugdach 12 keine Querträger, zumindest nicht im vorderen Bereich der Dachöffnung 18, vorgesehen.

Das Dachmodul 10 umfaßt einen Modulrahmen 22, der über den ganzen Umfang des Dachmoduls 10 verläuft und ein oder mehrere feste oder bewegbare Modulteile, wie beispielsweise einen Moduldeckel 24 sowie einen unterhalb der Modulteile angeordneten Festhimmel 26 trägt, der sich zumindest im Randbereich des Moduldaches erstreckt. Der Umfangsrandbereich 28 des Festhimmels 26 ragt seitlich über den Moduldeckel 24 hinaus und verläuft vom Rahmen 22 aus beispielsweise schräg nach unten. Der Festhimmel 26, insbesondere sein Umfangsrandbereich 28, ist im wesentlichen starr, d.h. nicht klappbar oder faltbar, jedoch zumindestens in einer Höhe, die etwas größer ist als die der Kleberaupe 20, elastisch verformbar, ausgebildet. Der Rahmen 22 umfaßt ferner einen im wesentlichen starren Umfangsrandbereich 30, welcher ebenfalls seitlich über den Moduldeckel 24 hinausragt.

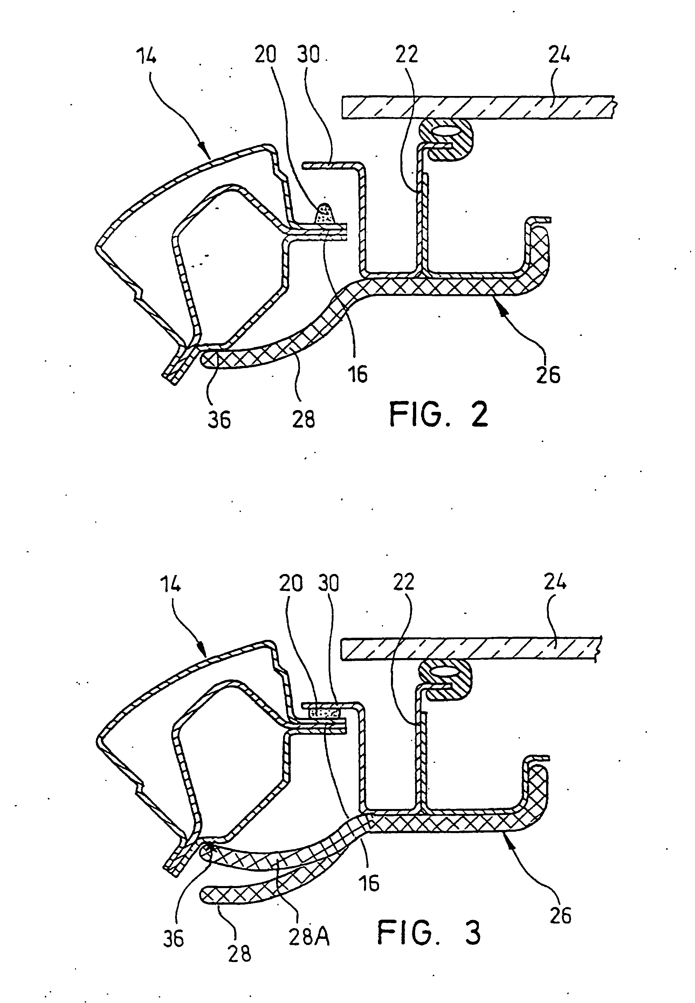

Das Dachmodul 10 ist ferner mindestens mit einem vorderen Querträger 32 versehen, welcher in das Dachmodul integriert ist. Das Dachmodul 10 kann eine Öffnung aufweisen, die von einem verstellbaren Deckel verschließbar und wahlweise mindestens zum Teil freigebbar ist. Ferner kann das Dachmodul 10 zusätzliche Komponenten, wie beispielsweise Solargeneratoren, Lüftungselemente und ähnliches enthalten. Das Dachmodul 10 und das Fahrzeugdach 12 bzw. die Rohkarosserie sind so ausgebildet, daß das vormontierte Dachmodul 10 von vorn in die Längsträger 14 zwecks nachfolgender Befestigung mittels der Kleberaupe 20 an den Längsträgem 14 einschiebbar ist, um die Dachöffnung 18 abzudecken. Ausgehend von der in Fig. 1 gezeigten Stellung wird dabei das vormontierte Dachmodul 10 in Richtung des Pfeils 34 in die Längsträger 14 eingeschoben, wobei der Anlageflansch 16 sich zwischen dem Rahmenumfangsteil 30 und dem Festhimmelrandbereich 28 befindet. Die Höhe des Dachmoduls wird dabei durch eine Abstützfläche 36 der Längsträger 14 bestimmt, an welchen sich der äußerste Rand des Festhimmel-Umfangsrandbereichs 28 von unten anlegt. Diese Höhe ist so gewählt, daß ein hinreichender Abstand zwischen der Kleberaupe 20 auf dem Anlageflansch 16 und dem Umfangsteil 30 des Modulrahmens 22 besteht, so daß keine Berührung der Kleberaupe 20 beim Einschieben des Dachmoduls 10 stattfindet. Wenn das Dachmodul 10 seine horizontal korrekte Lage erreicht hat, wird das Dachmodul 10 als Ganzes abgesenkt, so daß der Umfangsrandbereich 30 des Modulrahmens 22 auf der Kleberaupe 20 zu liegen kommt, welche von dem Auflageflansch 16 getragen wird, siehe Fig. 3. In dieser Stellung kann der Querträger 32 zur Stabilitätserhöhung mit den Längsträgern 14 verschraubt werden, um das Fahrzeugdach 12 in Querrichtung zu versteifen und so das Fehlen bzw. die Reduktion des Karosseriedachquerträgers zu kompensieren.

Wenn die Kleberaupe 20 in der in Fig. 3 gezeigten Stellung ausgehärtet ist, ist der Montagevorgang des Dachmoduls 10 abgeschlossen. Dabei legt sich der Randbereich 28 des Festhimmels bevorzugt, wie in Fig. 3 mit 28A angedeutet, aufgrund seiner Elastizität selbsttätig von unten an die Abstützfläche 36 des Längsträgers 14 an.

### Bezugszeichenliste

- Dachmodul: **10**
- Fahrzeugdach (Rohkarrosserie): **12**
- Längsträger von 12: **14**
- Auflageflansch: **16**
- Dachöffnung: **18**
- Kleberaupe: **20**
- Modulrahmen: **22**
- Moduldeckel: **24**
- Festhimmel: **26**
- Umfangsrandbereich von 26: **28, 28A**
- Umfangsrandbereich von 22: **30**
- Querträger: **32**
- Einschubrichtung: **34**
- Abstützfläche: **36**

## Patentansprüche

1. Fahrzeugdach mit einer Dachöffnung (18) zwischen zwei fahrzeugfesten seitlichen Längsträgern (14), an welchen ein die Dachöffnung abdeckendes vormontiertes Dachmodul (10) fest angebracht ist, wobei das Dachmodul (10) an den beiden mit den Längsträgern (14) in Eingriff stehenden Seiten so ausgebildet ist, daß ein starrer oberer Teil (30) auf dem jeweiligen Längsträger aufliegt, **dadurch gekennzeichnet, daß** ein elastisch verformbarer unterer Teil (28) den jeweiligen Längsträger untergreift, wobei das Fahrzeugdach so ausgebildet ist, daß das Dachmodul zur Befestigung an den Längsträgern von vorn oder von hinten in die Längsträger einschiebbar ist.

2. Fahrzeugdach nach Anspruch 1, **dadurch gekennzeichnet, daß** der im untere Teil (28) der Randbereich eines Festhimmels (26) ist.

3. Fahrzeugdach nach Anspruch 1 oder 2, **dadurch gekennzeichnet, daß** mindestens ein Querträger (32) zur Verbindung der beiden Längsträger (14) in das Dachmodul (10) integriert ist, der bei befestigtem Dachmodul zur Querversteifung des Fahrzeugdaches (12) dient.

4. Fahrzeugdach nach Anspruch 3, **dadurch gekennzeichnet, daß** bei von vorn bzw. von hinten einschiebbarem Dachmodul (10) der vordere bzw. hintere Querträger des Fahrzeugdaches durch einen entsprechenden integrierten Querträger (32) des Dachmoduls ersetzt ist.

5. Fahrzeugdach nach einem der vorhergehenden Ansprüche, **dadurch gekennzeichnet, daß** die beiden Längsträger (14) mit einem sich im wesentlich horizontal erstreckenden Auflageflansch (16) für das Dachmodul (10) versehen ist, auf welchem bei befestigtem Dachmodul jeweils der obere starre Teil (30) aufliegt und befestigt ist.

6. Fahrzeugdach nach Anspruch 5, **dadurch gekennzeichnet, daß** der Auflageflansch (16) an dem Ende der Längsträger (14), von welchem aus das Dachmodul (10) nicht eingeschoben wird, eine Verbindung zwischen den Längsträgern bildet.

7. Fahrzeugdach nach Anspruch 6, **dadurch gekennzeichnet, daß** der starre obere Teil (30) mittels einer Kleberaupe (20) an dem Auflageflansch (16) befestigt ist.

8. Fahrzeugdach nach einem der vorhergehenden Ansprüche, **dadurch gekennzeichnet, daß** der starre obere Teil (30) ein Teil eines Modulrahmens (22) ist.

9. Fahrzeugdach nach einem der vorhergehenden Ansprüche, **dadurch gekennzeichnet, daß** das Dachmodul (10) eine Dachöffnung aufweist, die von einem oder mehreren verstellbaren Deckel (24) bzw. Deckeln verschließbar und wahlweise mindestens zum Teil freigebbar ist.

10. Fahrzeugdach nach einem der vorhergehenden Ansprüche, **dadurch gekennzeichnet, daß** der untere Teil (28) des Dachmoduls (10) in vertikaler Richtung eine elastische Verformbarkeit aufweist, die zumindestens die Höhe einer Kleberaupe (20) ausgleicht.

11. Verfahren zur Montage eines vormontierten Fahrzeugdachmoduls (10) zum Abdecken einer Fahrzeugdachöffnung (18) zwischen zwei fahrzeugfesten seitlichen Längsträgern (14), wobei das vormontierte Dachmodul von vorn oder von hinten in die Längsträger eingeschoben wird, wobei nach dem Einschieben ein starrer oberer Teil (30) jeder der beiden Längsseiten des Dachmoduls auf dem jeweiligen Längsträger aufliegt, während ein elastisch verformbarer unterer Teil (28) jeder der beiden Längsseiten des Dachmoduls den jeweiligen Längsträger untergreift, und anschließend das Dachmodul an den Längträgern befestigt wird.

12. Verfahren nach Anspruch 11, **dadurch gekennzeichnet, daß** vor dem Einschieben des Dachmoduls (10) eine Kleberaupe (20) auf jeden Längsträger (14) oder (30) aufgebracht wird, beim Einschieben das Dachmodul in einer bestimmten Höhe bewegt wird, so daß der Abstand des starren oberen Teils (30) zu der Kleberaupe hinreichend ist, daß keine Berührung erfolgt, und nach Erreichen der Endposition des Dachmoduls das Dachmodul auf die Kleberaupe abgesenkt wird, so daß die Kleberaupe nach dem Aushärten eine feste Verbindung zwischen dem Dachmodul und den Längsträgem herstellt.

13. Verfahren nach Anspruch 12, **dadurch gekennzeichnet, daß** während des Einführens bei nicht ausreichendem Abstand der Teile (16) und (28) die Außenkante des Festhimmels (26) mittels einer Abstützfläche (36) nach unten gebogen wird und nach Erreichen der Endposition (Absetzen auf die Kleberaupe) wieder elastisch zurückfedert.

14. Verfahren nach Anspruch 13, **dadurch gekennzeichnet, daß** der bzw. jeder in das Dachmodul (10) integrierte Querträger (32) nach dem Absenken des Dachmoduls auf die Kleberaupe (20) mit den Längsträgern (14) verschraubt, vernietet oder anderweitig zusätzlich befestigt wird.

15. Vormontiertes Dachmodul (10) zum Abdecken einer Fahrzeugdachöffnung (18) zwischen zwei fahrzeugfesten seitlichen Längsträgem (14) mittels Befestigung an bzw. zwischen den beiden Längsträgern, das so ausgebildet ist, daß es vor der Befestigung an den Längsträgern von vom oder von hinten in die Längsträger einschiebbar ist, wobei nach der Befestigung des Dachmoduls ein starrer oberer Teil (30) jeder der beiden Längsseiten des Dachmoduls auf dem jeweiligen Längsträger aufliegt, während ein elastisch verformbarer unterer Teil (28) jeder der beiden Längsseiten des Dachmoduls den jeweiligen Längsträger untergreift.

## Claims

1. Motor vehicle roof with a roof opening (18) between two lateral side members (14) of the vehicle, to which a preassembled roof module (10) that covers the roof opening is firmly fixed, the roof module (10) being formed, on the two sides which engage with the side members (14), in such a way that a rigid upper part (30) bears on the respective side member, **characterized in that** an elastically deformable lower part (28) engages underneath the respective side member, the motor vehicle roof being formed in such a way that the roof module can be pushed into the side members from the front or from the rear in order to be fixed to the side members.

2. Motor vehicle roof according to Claim 1, **characterized in that** the lower part (28) is the edge area of a fixed headlining (26).

3. Motor vehicle roof according to Claim 1 or 2, **characterized in that** at least one crossmember (32) is integrated into the roof module (10) to join the two side members (14) and provides transverse stiffening of the motor vehicle roof (12) when the roof module is fixed.

4. Motor vehicle roof according to Claim 3, **characterized in that**, in the case of a roof module (10) which can be inserted from the front or from the rear, the front or rear crossmember of the motor vehicle roof is replaced by a corresponding integrated crossmember (32) of the roof module.

5. Motor vehicle roof according to one of the preceding claims, **characterized in that** the two side members (14) are provided with a support flange (16) extending substantially horizontally for the roof module (10), on which support flange (16) in each case the upper rigid part (30) bears and is fixed when the roof module is fixed.

6. Motor vehicle roof according to Claim 5, **characterized in that**, at the end of the side members (14) from which the roof module (10) is not inserted, the support flange (16) forms a connection between the side members.

7. Motor vehicle roof according to Claim 6, **characterized in that** the rigid upper part (30) is fixed by a bead (20) of adhesive on the support flange (16).

8. Motor vehicle roof according to one of the preceding claims, **characterized in that** the rigid upper part (30) is a part of a module frame (22).

9. Motor vehicle roof according to one of the preceding claims, **characterized in that** the roof module (10) has a roof opening which can be closed by one or more cover (24) or covers which can be displaced and opened, at least partially, as desired.

10. Motor vehicle roof according to one of the preceding claims, **characterized in that** the lower part (28) of the roof module (10) exhibits elastic deformability in the vertical direction, which compensates at least for the height of a bead (20) of adhesive.

11. Method of installing a preassembled motor vehicle roof module (10) for covering a motor vehicle roof opening (18) between two lateral side members (14) which are fixed to the vehicle, the preassembled roof module being pushed into the side members from the front or from the rear, a rigid upper part (30) of each of the two longitudinal sides of the roof module bearing on the respective side member after insertion, while an elastically deformable lower part (28) of each of the two longitudinal sides of the roof module engages underneath the respective side member, and the roof module is then fixed to the side members.

12. Method according to Claim 11, **characterized in that**, before the insertion of the roof module (10), a bead (20) of adhesive is applied to each side member (14) or (30), during insertion, the roof module is moved at a certain height so that the distance of the rigid upper part (30) from the bead of adhesive is sufficient to prevent contact and, after reaching the end position of the roof module, the module is lowered onto the bead of adhesive so that the bead, after curing, produces a firm connection between the roof module and the side members.

13. Method according to Claim 12, **characterized in that**, during the insertion, if there is not sufficient space between the parts (16) and (28), the outer edge of the fixed headlining (26) is bent downwards by means of a supporting surface (36) and springs back elastically again after the end position has been reached (placement on the bead of adhesive).

14. Method according to Claim 13, **characterized in that**, after the roof module has been lowered onto the bead (20) of adhesive, the crossmember (32) or each crossmember integrated into the roof module (10) is screwed, riveted or otherwise additionally fixed to the side members (14).

15. Preassembled roof module (10) for covering a motor vehicle roof opening (18) between two lateral side members (14) fixed to the vehicle, by means of fixing to or between the two side members, the said roof module being designed such that, before being fixed to the side members, it can be pushed into the side members from the front or from the rear, a rigid upper part (30) of each of the two longitudinal sides of the roof module bearing on the respective side member'after the roof module has been fixed, while an elastically deformable lower part (28) of each of the two longitudinal sides of the roof module engages underneath the respective side member.

## Revendications

1. Toit de véhicule muni d'une ouverture (18) entre deux supports longitudinaux latéraux (14) faisant corps avec ledit véhicule et sur lesquels est monté, de façon rigide, un module de toit préassemblé (10) recouvrant ladite ouverture du toit, ledit module de toit (10) offrant, sur les deux côtés en prise avec les supports longitudinaux (14), une réalisation telle qu'une partie supérieure rigide (30) repose à plat sur le support longitudinal considéré, **caractérisé par le fait qu'**une partie inférieure (28) élastiquement déformable emprisonne par-dessous le support longitudinal considéré, le toit de véhicule étant réalisé de façon telle que le module de toit puisse être inséré dans les supports longitudinaux par coulissement depuis l'avant ou depuis l'arrière, en vue de la fixation auxdits supports longitudinaux.

2. Toit de véhicule selon la revendication 1, **caractérisé par le fait que** la partie inférieure (28) représente la région marginale d'un pavillon fixe (26).

3. Toit de véhicule selon la revendication 1 ou 2, **caractérisé par le fait qu'**au moins un support transversal (32), intégré dans le module de toit (10) pour solidariser les deux supports longitudinaux (14), sert à la rigidification transversale du toit (12) du véhicule à l'état fixé dudit module de toit.

4. Toit de véhicule selon la revendication 3, **caractérisé par le fait que**, lorsque le module de toit (10) se trouve à l'état pouvant être respectivement inséré par l'avant ou par l'arrière, le support transversal respectivement antérieur ou postérieur du toit de véhicule est remplacé par un support transversal intégré (32) correspondant dudit module de toit.

5. Toit de véhicule selon l'une des revendications précédentes, **caractérisé par le fait que** les deux supports longitudinaux (14) sont pourvus d'une aile d'appui (16) s'étendant pour l'essentiel dans le sens horizontal, affectée au module de toit (10), et sur laquelle la partie supérieure rigide (30) est respectivement soutenue et fixée à l'état fixé dudit module de toit.

6. Toit de véhicule selon la revendication 5, **caractérisé par le fait que** l'aile d'appui (16) matérialise une solidarisation entre les supports longitudinaux à l'extrémité desdits supports longitudinaux (14) à partir de laquelle le module de toit (10) n'est pas inséré.

7. Toit de véhicule selon la revendication 6, **caractérisé par le fait que** la partie supérieure rigide (30) est fixée à l'aile d'appui (16) au moyen d'un cordon d'adhésif (20).

8. Toit de véhicule selon l'une des revendications précédentes, **caractérisé par le fait que** la partie supérieure rigide (30) fait partie d'un cadre (22) du module.

9. Toit de véhicule selon l'une des revendications précédentes, **caractérisé par le fait que** le module de toit (10) comporte un orifice pouvant être obturé par un ou plusieurs couvercle(s) réglable(s) (24), et pouvant être sélectivement dégagé au moins en partie.

10. Toit de véhicule selon l'une des revendications précédentes, **caractérisé par le fait que** la partie inférieure (28) du module de toit (10) présente, dans le sens vertical, une déformabilité élastique compensant au moins la hauteur d'un cordon d'adhésif (20).

11. Procédé de montage d'un module préassemblé (10) de toit de véhicule, pour recouvrir une ouverture (18) pratiquée dans le toit du véhicule entre deux supports longitudinaux latéraux (14) faisant corps avec ledit véhicule, le module de toit préassemblé étant inséré dans les supports longitudinaux par coulissement depuis l'avant ou depuis l'arrière, sachant que, à l'issue de l'insertion, une partie supérieure rigide (30) de chacun des deux côtés longitudinaux du module de toit repose à plat sur le support longitudinal considéré, tandis qu'une partie inférieure (28) élastiquement déformable de chacun des deux côtés longitudinaux dudit module de toit emprisonne par-dessous le support longitudinal considéré, ledit module de toit étant ensuite fixé auxdits supports longitudinaux.

12. Procédé selon la revendication 11, **caractérisé par le fait que**, préalablement à l'insertion du module de toit (10), un cordon d'adhésif (20) est déposé sur chaque support longitudinal (14 ou 30) ; ledit module de toit est animé d'un mouvement à une hauteur déterminée, lors de l'insertion, de telle sorte que la distance comprise entre ledit cordon d'adhésif et la partie supérieure rigide (30) soit suffisante pour empêcher une venue en contact , et le module de toit est abaissé sur ledit cordon d'adhésif, après que la position extrême dudit module de toit a été atteinte, de telle sorte que ledit cordon d'adhésif établisse, après durcissement, une solidarisation rigide entre ledit module de toit et les supports longitudinaux.

13. Procédé selon la revendication 12, **caractérise par le fait que** le bord extérieur du pavillon fixe (26) est cintré vers le bas au moyen d'une surface d'appui (36) au stade de l'introduction, dans le cas d'une distance insuffisante entre les parties (16 et 28), puis rebondit élastiquement après que la position extrême a été atteinte (dépôt sur le cordon d'adhésif).

14. Procédé selon la revendication 13, **caractérisé par le fait que**, à l'issue de l'abaissement du module de toit sur le cordon d'adhésif (20), le ou chaque support transversal (32) respectivement intégré dans ledit module de toit (10) est boulonné ou riveté sur les supports longitudinaux (14), voire additionnellement fixé à ces derniers d'une autre manière.

15. Module de toit préassemblé (10) pour recouvrir une ouverture (18) pratiquée dans le toit d'un véhicule entre deux supports longitudinaux latéraux (14) faisant corps avec ledit véhicule, au moyen d'une fixation respective à ou entre les deux supports longitudinaux, ledit module étant réalisé de telle sorte qu'il puisse être inséré dans les supports longitudinaux par coulissement depuis l'avant ou depuis l'arrière, préalablement à la fixation auxdits supports longitudinaux, sachant que, à l'issue de la fixation du module de toit, une partie supérieure rigide (30) de chacun des deux côtés longitudinaux dudit module de toit repose à plat sur le support longitudinal considéré, tandis qu'une partie inférieure (28) élastiquement déformable de chacun des deux côtés longitudinaux dudit module de toit emprisonne par-dessous le support longitudinal considéré.
